# EUROPEAN PATENT SPECIFICATION

(11) **EP 3 584 961 B1**
(45) Date of publication and mention of the grant of the patent: **22.02.2023**
(21) Application number: 18178857.1
(22) Date of filing: 20.06.2018
(51) Int. Cl.: H04B 17/00, H04M 1/24, H04B 17/12, H04B 17/18, H04B 17/21

(54) **TEST SYSTEM, TEST SETUP AND METHOD FOR CALIBRATING A COMMUNICATION DEVICE**
TESTSYSTEM, TESTAUFBAU UND VERFAHREN ZUR KALIBRIERUNG EINER KOMMUNIKATIONSVORRICHTUNG
SYSTÈME DE TEST, CONFIGURATION DU TEST ET PROCÉDÉ D'ÉTALONNAGE D'UN DISPOSITIF DE COMMUNICATION

(43) Date of publication of application: 25.12.2019
(73) Proprietor: Rohde & Schwarz GmbH & Co. KG, 81671 München (DE)
(72) Inventor: STORN, Rainer, 85551 Kirchheim (DE); WEIN, Dominic, 81673 München (DE)
(74) Representative: Prinz & Partner mbB

(56) References cited:
- EP-A1- 3 276 747
- EP-A2- 3 128 767

## Description

The invention relates to a test system, a test setup and a method for calibrating a communication device.

The majority of communication devices needs to be calibrated as they comprise a component that needs to be tuned in order to fulfill a specification. In an airborne Software Defined Radio (SDAR) the component responsible for the squelch function has to be calibrated in order to feed audio to a pilot only if valid audio signals are present and muting the pilot's headset in case of noise. In this case, a real-time signal-to-noise-ratio estimator (SNR estimator) must be parameterized, i.e. calibrated for all conceivable situations.

Usually, a plurality of calibration parameters, for example six calibration parameters in case of an SOAR, have to be tuned simultaneously. Tuning the SNR emulator and finding the correct calibration parameters by hand is a very tedious and time-consuming task.

As shown in EP 3 276 747 A1, a radio frequency device comprising a plurality of antenna elements can be calibrated by a calibration system that provides calibrated positions of the antenna elements.

Further, EP 3 128 767 A2 shows a system for improving the sound output of external speakers. The system has a processing component and at least one speaker. To improve the sound output of the external speaker, an audio signal is played via the speaker. The outputted audio signal is subsequently recorded by a microphone, a corresponding digital signal is provided to processing the component and compared to the original audio signal. Based on the comparison, a modified audio signal is created and played via the speaker.

Thus, it is the object of the invention to provide a test system, a test setup and a method for calibrating a communication device that functions automatically and quickly.

For this purpose, a test system for calibration of a communication device according to claim 1.

The test data pattern and/or the reference data pattern may be stored in a database. For example, the database is included in the calibration unit or the test system or the database is accessible by the calibration unit via a network or an internet connection.

Further, a test setup for calibration of a communication device is provided for this purpose, comprising the communication device and a test system according to the invention, wherein the communication device comprises a signal input, a signal output, a calibration input and a calibratable component connected to the calibration input. The signal input is connected to the signal generation unit of the test system, the signal output is connected to the receiver unit of the test system, and the calibration input is connected to the calibration output of the test system.

The communication device, more precisely the calibratable component, is calibrated, in particular automatically, by the calibration data received via the calibration input.

Furthermore, for the above mentioned purpose, a method for calibrating a communication device according to claim 9 is provided.

The test system used may be as described within this disclosure.

By providing a calibration unit that is on the one hand able to define the input into the communication device and on the other hand receives the response of the communication device, it is possible for the calibration unit to automatically determine calibration data that lead to the desired function or behavior of the communication device. The measurement data is compared with the reference data in order to minimize deviations between the desired data, i.e., the output of the communication device and the measurement data.

Calibration data is a single value or a set of values of at least one of or all of the parameters necessary for calibrating the calibratable component and the communication device, i.e. a set of values of the calibration parameters.

For example in case of a SDAR, the calibration data contains the values for the parameterization of the SNR estimator to create a desired squelch function.

The calibration data is used for tuning a calibratable component of the communication device, for example a SNR estimator.

In an embodiment, the test data pattern and/or the reference data pattern is a predefined pattern, a predefined specification, a user defined pattern and/or a user defined specification. This way, precise test signals and reference data patterns may be generated.

According to one aspect of the invention, the signal generation unit is able to generate radio-frequency signals allowing a simple way for calibrating radio frequency devices. The signal generation unit is, for example, a source-measure-unit (SMU).

According to another aspect, the receiver unit is a receiver for an audio signal, IP data, analog data signals and/or modem signals allowing the calibration of a wide range of communication devices.

For a versatile use, the receiver unit is configured to receive an audio signal, an optical signal, a radio frequency signal, an image signal and/or a visible signal.

For a fast and/or highly accurate calibration of the communication device, the calibration unit is configured determine the calibration data using differential evolution, an evolution strategy, a genetic algorithm and/or a particle swarm algorithm.

In another aspect of the invention, the communication device is an airborne radio, in particular a software defined airborne radio, allowing an automatic calibration of radios.

For automatic tuning of the squelch function, the communication device comprises a signal-to-noise-ratio estimator, wherein the signal-to-noise-ratio estimator is tuned by the calibration data.

Preferably, the calibration data is outputted using the calibration output of the test system.

In a variant of the invention, the test signal is a signal of varying amplitude with varying noise to calibrate the communication device for various situations.

The variations of the amplitude and/or noise may be independent from each other and/or they are predetermined, e.g. by the test data pattern.

For a precise calibration, the calibration data is determined using a cost function, in particular the cost function being the deviation from a desired squelch setting or behavior.

Minimization of the cost function for calibration may be done with differential evolution, an evolution strategy, a genetic algorithm and/or a particle swarm algorithm in order to improve quality and/or efficiency.

Of course, the features disclosed with respect to the method are also applicable to the test system and the test setup and vice versa. For example, the calibration unit may be configured to perform any one of the steps disclosed with respect to the method and vice versa.

Further features and advantages of the invention will be apparent from the following description as well as the accompanying drawings to which reference is made. In the drawings:
- Figure 1 shows a test setup according to the invention comprising a test system according to the invention schematically, and
- Figure 2 a flow-chart of the method according to the invention.

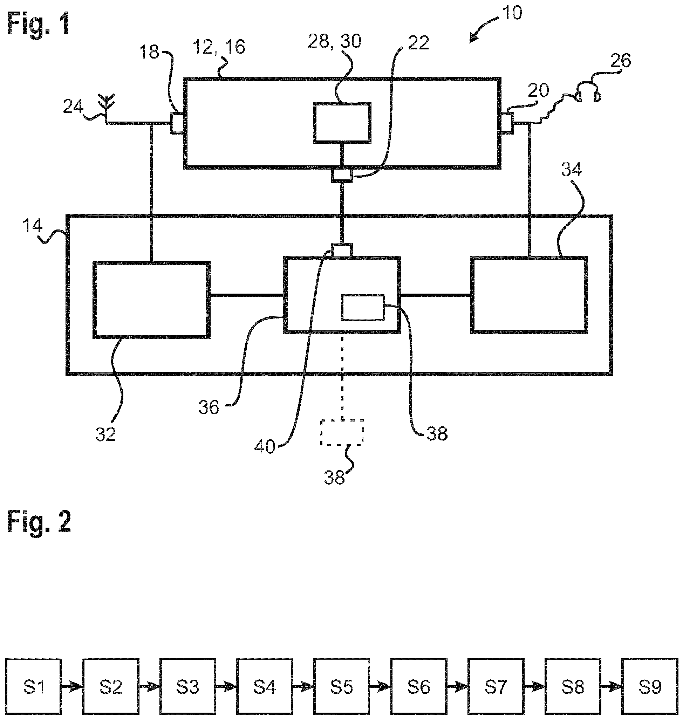

Figure 1 shows a schematic of a test setup 10 with a communication device 12 and a test system 14.

The test setup 10, more particularly the test system 14 is used for calibrating the communication device 12.

In the shown example, the communication device 12 is an airborne radio 16, more specifically a software defined airborne radio (SOAR).

The communication device 12 comprises a signal input 18, a signal output 20 and a calibration input 22.

The signal input 18 is connected to an antenna 24 in order to pick up radio frequency signals used for communication.

The signal output 20 is connected to an audio output device 26, for example a headset or a speaker.

The airborne radio 16 further comprises a calibratable component 28 that influences the way the signal received at the signal input 18 is processed and transmitted to the signal output 20.

In the case of an airborne radio 16, the calibratable component 28 is a signal-to-noise-ratio estimator (SNR estimator) 30. The SNR estimator 30 is used for the squelch function, i.e. to determine, whether or not a signal received at the signal input 18 shall be outputted through the signal output 20, in order to output only significant signals and suppress static noise.

(This function of the SNR estimator 30 is called squelch and the calibration is used to create the desired squelch setting.)

In order to calibrate the SNR estimator 30, i.e. to define whether or not a signal shall be outputted to the signal output 20, the SNR estimator 30 needs to be calibrated, i.e. the SNR estimator is the calibratable component 28.

The calibration may be performed by setting one or more calibration parameters to correct values.

For this purpose, the calibratable component 28, here the SNR estimator 30, is connected to the calibration input 22 in order to receive values for the calibration parameters, i.e. calibration data.

For proper calibration of the SNR estimator 30, six different calibration parameters have to be set in relation to one another.

The test system 14 comprises a signal generation unit 32, a receiver unit 34 and a calibration unit 36.

The signal generation unit 32 is for example able to generate radio-frequency signals. The signal generation unit 32 may be a source measure unit (SMU).

In the shown embodiment, the receiver unit 34 is a receiver for an audio signal. The receiver unit 34 is therefore configured to receive an audio signal.

It might as well be configured to receive an optical signal, a radio frequency signal, an image signal and/or a visible signal.

Alternatively, the receiver unit is a receiver for IP data, analog data signals, modem signals and/or other communication signals.

The calibration unit 36 comprises a database 38 in the shown embodiment.

The database 38 includes test data patterns and reference data patterns for signals. The test data pattern and the reference data pattern are predefined or user defined patterns, they are based on a predefined specification, of the signal and/or are user defined specifications of the signal.

Alternatively, the calibration unit 36 may have access to a database 38 not being part of the test system 14. The database 38 may then be reached by the calibration unit 36 via a network or the internet. The calibration unit 36 comprises suitable network interfaces in this case.

The calibration unit 36 is connected between the signal generation unit 32 and the receiver unit 34.

The calibration unit 36 is configured to receive signals and measurements from the receiver unit 34 and to control the signal generation unit 32 to create test signals.

Further, the calibration unit 36 and with that the test system 14 has a calibration output 40.

For calibrating the communication device 12 the test system 14 is connected to the communication device 12.

This is done by connecting the signal generation unit 32 of the test system 14 with the signal input 18 of the communication device, connecting the receiver unit 34 of the test system 14 to the signal output 20 of the communication device 12 and by connecting the calibration output 40 of the calibration unit 36 to the calibration input 22 of the communication device 12.

The connections may be realized electrically via cables or wirelessly using a known protocol, like Bluetooth or Wi-Fi.

For calibrating, the calibration unit 36 accesses a test data pattern from the database 38 and controls the signal generation unit 32 to create a test signal according to the test data pattern (steps S1, S2).

The test signal is a signal of varying amplitude with varying noise. The variation of the amplitude and/or the noise may be a predetermined individually by the test data pattern chosen.

The test signal generated by the signal generation unit 32 is then fed to the signal input 18 of the communication device 12 (step S3).

The communication device 12 processes the test signal using the calibratable component 28, in the shown case the SNR estimator 30, in the same way that a regular signal would have been processed during the intended use (step S4).

A processed signal is then transmitted via the signal output 20 of the communication device 12, wherein the processed signal is the output of the communication device 12 in response to the test signal.

The receiver unit 34 receives the processed signal from the communication device 12, measures the signal and generates measurement data based on the measured signal (steps S5, S6).

In step S8, the calibration unit 36 determines calibration data based on the received measurement data and a reference data pattern taken from the database 38 (step S8).

The reference data pattern is chosen depending on the test data pattern used to create the test signal.

Thus, the database 38 includes information about the relation of test data patterns and reference data patterns.

The calibration data includes a single value of a calibration parameter, preferably a set of values for all necessary calibration parameters.

Determining the values for the calibration parameter, i.e. the calibration data, is done by comparing the measurement data with the reference data pattern and using the deviation of the measurement data from the reference data pattern to create the calibration data.

For this purpose, the calibration unit 36 uses a cost-function, wherein the cost-function is the deviation from a desired squelch setting.

The minimization of the cost-function may then be carried out by a differential evolution, an evolution strategy, a genetic algorithm and/or a particle swarm algorithm.

The calibration unit 36 includes these algorithms or strategies and is configured to apply them on the measurement data.

Once the calibration data has been determined, the calibration data is transmitted to the communication device 12, more particularly it is outputted using the calibration output 40 and received via the calibration input 22 from the calibratable component 28, here the SNR estimator 30 (step S9).

With the calibration data, the calibratable component 28, i.e. the signal-to-noise-ratio estimator 30 and with that the communication device 12 is calibrated.

Thus, the communication device 12 has been calibrated automatically without manual input.

For a higher accuracy, the steps S1 to S9 may be repeated.

## Claims

1. Test system for calibration of a communication device (12), said test system comprising at least one signal generation unit (32), at least one receiver unit (34) and at least one calibration unit (36), the calibration unit (36) having a calibration output (40) and being connected to the signal generation unit (32) and the receiver unit (34),
wherein the receiver unit (34) is configured to receive a processed signal from the communication device (12), wherein the processed signal is the output of the communication device (12) in response to a test signal, wherein the receiver unit (34) is further configured to measure the processed signal and to generate measurement data based on the measured signal,
wherein the calibration unit (36) is configured to receive the measurement data from the receiver unit (34),
**characterized in that** the calibration unit (36) is configured to control the signal generation unit (32) to generate the test signal according to a test data pattern, the test signal being fed to a signal input (18) of the communication device (12),
wherein the calibration unit (36) is configured to determine calibration data based on the measurement data and a reference data pattern, the reference data pattern depending on the test data pattern, wherein the calibration data is a single value or a set of values of at least one of the parameters necessary for calibrating a calibratable component of the communication device (12) and the communication device (12),
wherein the calibration unit (36) is configured to compare the measurement data with the reference data pattern and to determine the calibration data by comparing the measurement data with the reference data pattern and using the deviation of the measurement data from the reference data pattern to create the calibration data, and
wherein the calibration unit (36) is configured to output the calibration data via the calibration output (40) to the communication device (12).

2. Test system according to claim 1, wherein
the test data pattern and/or the reference data pattern is a predefined pattern, a predefined specification, a user defined pattern and/or a user defined specification.

3. Test system according to claim 1 or 2, wherein
the test signal is a signal of varying amplitude with varying noise.

4. Test system according to any one of the preceding claims, wherein
the receiver unit (34) is a receiver for an audio signal, IP data, analog data signals and/or modem signals.

5. Test system according to any one of the preceding claims, wherein
the calibration unit (36) is configured to determine the calibration data using differential evolution, an evolution strategy, a genetic algorithm and/or a particle swarm algorithm.

6. Test setup for calibration of a communication device (12), comprising the communication device (12) and a test system (14) according to any one of the preceding claims, wherein the communication device (12) comprises a signal input (18), a signal output (20), a calibration input (22) and a calibratable component (28) connected to the calibration input (22),
wherein the signal input (18) is connected to the signal generation unit (32) of the test system (14), the signal output (20) is connected to the receiver unit (34) of the test system (14), and the calibration input (22) is connected to the calibration output (40) of the test system (14).

7. Test setup according to claim 6, wherein
the communication device (12) is an airborne radio (16), in particular a software defined airborne radio.

8. Test setup according to claim 6 or 7, wherein
the communication device (12) comprises a signal-to-noise ratio estimator (30), wherein the signal-to-noise ratio estimator (30) is tuned by the calibration data.

9. Method for calibrating a communication device (12), comprising the following steps:
a) generating a test signal according to a test data pattern,
b) feeding the test signal to the communication device (12),
c) measuring the output generated by the communication device (12) in response to the test signal,
d) generating measurement data based on the measured output,
e) determining calibration data by a calibration unit (36) based on the measurement data and a reference data pattern by comparing the measurement data with the reference data pattern and using the deviation of the measurement data from the reference data pattern to create the calibration data, the reference data pattern depending on the test data pattern, and
f) calibrating the communication device using the calibration data, wherein the calibration data is a single value or a set of values of at least one of the parameters necessary for calibrating a calibratable component of the communication device (12) and the communication device (12).

10. Method according to claim 9, wherein
a test system (14) according to any one of the claims 1 to 5 is used, wherein step a) is performed by the signal generation unit (32), and wherein steps c) and d) are performed by the receiver unit (34).

11. Method according to claim 10, wherein
calibration data is outputted using the calibration output (40) of the test system (14).

12. Method according to any one of the claims 9 to 11 wherein
the test signal is a signal of varying amplitude with varying noise.

13. Method according to any one of the claims 9 to 12, wherein
the calibration data is determined using a cost function, in particular the cost function being the deviation from a desired squelch setting.

## Patentansprüche

1. Testsystem zum Kalibrieren einer Kommunikationsvorrichtung (12), wobei das Testsystem mindestens eine Signalerzeugungseinheit (32), mindestens eine Empfängereinheit (34) und mindestens eine Kalibriereinheit (36) umfasst, wobei die Kalibriereinheit (36) einen Kalibrierausgang (40) aufweist und mit der Signalerzeugungseinheit (32) und der Empfängereinheit (34) verbunden ist,
wobei die Empfängereinheit (34) dazu ausgelegt ist, ein verarbeitetes Signal von der Kommunikationsvorrichtung (12) zu empfangen, wobei das verarbeitete Signal die Ausgabe der Kommunikationsvorrichtung (12) in Reaktion auf ein Testsignal ist, wobei die Empfängereinheit (34) ferner dazu ausgelegt ist, das verarbeitete Signal zu messen und auf Basis des gemessenen Signals Messdaten zu erzeugen,
wobei die Kalibriereinheit (36) dazu ausgelegt ist, die Messdaten von der Empfängereinheit (34) zu empfangen,
**dadurch gekennzeichnet, dass** die Kalibriereinheit (36) dazu ausgelegt ist, die Signalerzeugungseinheit (32) derart zu steuern, dass sie das Testsignal gemäß einem Testdatenmuster erzeugt, wobei das Testsignal in einen Signaleingang (18) der Kommunikationsvorrichtung (12) eingespeist wird,
wobei die Kalibriereinheit (36) dazu ausgelegt ist, Kalibrierdaten auf Basis der Messdaten und eines Referenzdatenmusters zu bestimmen, wobei das Referenzdatenmuster vom Testdatenmuster abhängig ist, wobei die Kalibrierdaten ein einzelner Wert oder ein Satz von Werten von mindestens einem der Parameter sind, die zum Kalibrieren einer kalibrierbaren Komponente der Kommunikationsvorrichtung (12) und der Kommunikationsvorrichtung (12) erforderlich sind,
wobei die Kalibriereinheit (36) dazu ausgelegt ist, die Messdaten mit dem Referenzdatenmuster zu vergleichen, und durch Vergleichen der Messdaten mit dem Referenzdatenmuster und Verwenden der Abweichung der Messdaten vom Referenzdatenmuster, um die Kalibrierdaten zu erstellen, die Kalibrierdaten zu bestimmen, und
wobei die Kalibriereinheit (36) dazu ausgelegt ist, die Kalibrierdaten via den Kalibrierausgang (40) der Kommunikationsvorrichtung (12) auszugeben.

2. Testsystem nach Anspruch 1, wobei das Testdatenmuster und/oder das Referenzdatenmuster ein vordefiniertes Muster, eine vordefinierte Spezifikation, ein benutzerdefiniertes Muster und/oder eine benutzerdefinierte Spezifikation ist.

3. Testsystem nach Anspruch 1 oder 2, wobei das Testsignal ein Signal mit einer variierenden Amplitude mit variierendem Rauschen ist.

4. Testsystem nach einem der vorhergehenden Ansprüche, wobei die Empfängereinheit (34) ein Empfänger für ein Audiosignal, IP-Daten, analoge Datensignale und/oder Modemsignale ist.

5. Testsystem nach einem der vorhergehenden Ansprüche, wobei die Kalibriereinheit (36) dazu ausgelegt ist, die Kalibrierdaten unter Verwendung einer differenziellen Entwicklung, einer Entwicklungsstrategie, eines genetischen Algorithmus und/oder eines Partikelschwarmalgorithmus zu bestimmen.

6. Testaufbau zum Kalibrieren einer Kommunikationsvorrichtung (12), der die Kommunikationsvorrichtung (12) und ein Testsystem (14) nach einem der vorhergehenden Ansprüche umfasst, wobei die Kommunikationsvorrichtung (12) einen Signaleingang (18), einen Signalausgang (20), einen Kalibriereingang (22) und eine kalibrierbare Komponente (28), die mit dem Kalibriereingang (22) verbunden ist, umfasst,
wobei der Signaleingang (18) mit der Signalerzeugungseinheit (32) des Testsystems (14) verbunden ist, der Signalausgang (20) mit der Empfängereinheit (34) des Testsystems (14) verbunden ist und der Kalibriereingang (22) mit dem Kalibrierausgang (40) des Testsystems (14) verbunden ist.

7. Testaufbau nach Anspruch 6, wobei die Kommunikationsvorrichtung (12) ein luftgestütztes Funkgerät (16), insbesondere ein softwaredefiniertes luftgestütztes Funkgerät, ist.

8. Testaufbau nach Anspruch 6 oder 7, wobei die Kommunikationsvorrichtung (12) einen Signal-Rauschen-Verhältnis-Schätzer (30) umfasst, wobei der Signal-Rauschen-Verhältnis-Schätzer (30) durch die Kalibrierdaten abgestimmt wird.

9. Verfahren zum Kalibrieren einer Kommunikationsvorrichtung (12), das die folgenden Schritte umfasst:
a) Erzeugen eines Testsignals gemäß einem Testdatenmuster,
b) Einspeisen des Testsignals in die Kommunikationsvorrichtung (12),
c) Messen der Ausgabe, die von der Kommunikationsvorrichtung (12) in Reaktion auf das Testsignal erzeugt wird,
d) Erzeugen von Messdaten auf Basis der gemessenen Ausgabe,
e) Bestimmen von Kalibrierdaten durch eine Kalibriereinheit (36) auf Basis der Messdaten und eines Referenzdatenmusters durch Vergleichen der Messdaten mit dem Referenzdatenmuster und Verwenden der Abweichung der Messdaten vom Referenzdatenmuster, um die Kalibrierdaten zu erstellen, wobei das Referenzdatenmuster vom Testdatenmuster abhängig ist, und
f) Kalibrieren der Kommunikationsvorrichtung unter Verwendung der Kalibrierdaten, wobei die Kalibrierdaten ein einzelner Wert oder ein Satz von Werten von mindestens einem der Parameter sind, die zum Kalibrieren einer kalibrierbaren Komponente der Kommunikationsvorrichtung (12) und der Kommunikationsvorrichtung (12) erforderlich sind.

10. Verfahren nach Anspruch 9, wobei ein Testsystem (14) nach einem der Ansprüche 1 bis 5 verwendet wird, wobei Schritt a) von der Signalerzeugungseinheit (32) durchgeführt wird und wobei die Schritte c) und d) von der Empfängereinheit (34) durchgeführt werden.

11. Verfahren nach Anspruch 10, wobei Kalibrierdaten unter Verwendung des Kalibrierausgangs (40) des Testsystems (14) ausgegeben werden.

12. Verfahren nach einem der Ansprüche 9 bis 11, wobei das Testsignal ein Signal mit einer variierenden Amplitude mit variierendem Rauschen ist.

13. Verfahren nach einem der Ansprüche 9 bis 12, wobei die Kalibrierdaten unter Verwendung einer Kostenfunktion bestimmt werden, insbesondere wobei die Kostenfunktion die Abweichung von einer gewünschten Rauschsperreneinstellung ist.

## Revendications

1. Système de test pour l'étalonnage d'un dispositif de communication (12), ledit système de test comprenant au moins une unité de génération de signaux (32), au moins une unité de réception (34) et au moins une unité d'étalonnage (36), l'unité d'étalonnage (36) ayant une sortie d'étalonnage (40) et étant connectée à l'unité de génération de signaux (32) et à l'unité de réception (34),
dans lequel l'unité de réception (34) est conçue pour recevoir un signal traité du dispositif de communication (12), dans lequel le signal traité est la sortie du dispositif de communication (12) en réponse à un signal de test, dans lequel l'unité de réception (34) est en outre conçue pour mesurer le signal traité et pour générer des données de mesure sur la base du signal mesuré,
dans lequel l'unité d'étalonnage (36) est conçue pour recevoir les données de mesure de l'unité de réception (34),
**caractérisé en ce que** l'unité d'étalonnage (36) est conçue pour commander l'unité de génération de signaux (32) pour générer le signal de test selon un motif de données de test, le signal de test étant fourni à une entrée de signal (18) du dispositif de communication (12),
dans lequel l'unité d'étalonnage (36) est conçue pour déterminer des données d'étalonnage sur la base des données de mesure et d'un motif de données de référence, le motif de données de référence dépendant du motif de données de test, dans lequel les données d'étalonnage sont une valeur unique ou un ensemble de valeurs d'au moins un des paramètres nécessaires pour étalonner un composant étalonnable du dispositif de communication (12) et du dispositif de communication (12),
dans lequel l'unité d'étalonnage (36) est conçue pour comparer les données de mesure avec le motif de données de référence et pour déterminer les données d'étalonnage en comparant les données de mesure avec le motif de données de référence et en utilisant l'écart des données de mesure par rapport au motif de données de référence pour créer les données d'étalonnage, et
dans lequel l'unité d'étalonnage (36) est conçue pour délivrer les données d'étalonnage via la sortie d'étalonnage (40) au dispositif de communication (12).

2. Système de test selon la revendication 1, dans lequel le motif de données de test et/ou le motif de données de référence est un motif prédéfini, une spécification prédéfinie, un motif défini par l'utilisateur et/ou une spécification définie par l'utilisateur.

3. Système de test selon la revendication 1 ou 2, dans lequel le signal de test est un signal d'amplitude variable avec un bruit variable.

4. Système de test selon l'une quelconque des revendications précédentes, dans lequel l'unité de réception (34) est un récepteur pour un signal audio, des données IP, des signaux de données analogiques et/ou des signaux de modem.

5. Système de test selon l'une quelconque des revendications précédentes, dans lequel l'unité d'étalonnage (36) est conçue pour déterminer les données d'étalonnage en utilisant une évolution différentielle, une stratégie d'évolution, un algorithme génétique et/ou un algorithme d'essaimage de particules.

6. Configuration de test pour l'étalonnage d'un dispositif de communication (12), comprenant le dispositif de communication (12) et un système de test (14) selon l'une quelconque des revendications précédentes, dans lequel le dispositif de communication (12) comprend une entrée de signal (18), une sortie de signal (20), une entrée d'étalonnage (22) et un composant étalonnable (28) connecté à l'entrée d'étalonnage (22),
dans lequel l'entrée de signal (18) est connectée à l'unité de génération de signaux (32) du système de test (14), la sortie de signal (20) est connectée à l'unité de réception (34) du système de test (14), et l'entrée d'étalonnage (22) est connectée à la sortie d'étalonnage (40) du système de test (14).

7. Configuration de test selon la revendication 6, dans laquelle le dispositif de communication (12) est une radio aéroportée (16), notamment une radio aéroportée définie par logiciel.

8. Configuration de test selon la revendication 6 ou 7, dans laquelle le dispositif de communication (12) comprend un estimateur de rapport signal/bruit (30), dans lequel l'estimateur de rapport signal/bruit (30) est accordé par les données d'étalonnage.

9. Procédé d'étalonnage d'un dispositif de communication (12), comprenant les étapes suivantes :
a) générer un signal de test selon un motif de données de test,
b) fournir le signal de test au dispositif de communication (12),
c) mesurer la sortie générée par le dispositif de communication (12) en réponse au signal de test,
d) générer des données de mesure sur la base de la sortie mesurée,
e) déterminer des données d'étalonnage par une unité d'étalonnage (36) sur la base des données de mesure et d'un motif de données de référence en comparant les données de mesure avec le motif de données de référence et en utilisant l'écart des données de mesure par rapport au motif de données de référence pour créer les données d'étalonnage, le motif de données de référence dépendant du motif de données de test, et
f) étalonner le dispositif de communication en utilisant les données d'étalonnage, dans lequel les données d'étalonnage sont une valeur unique ou un ensemble de valeurs d'au moins un des paramètres nécessaires pour étalonner un composant étalonnable du dispositif de communication (12) et du dispositif de communication (12).

10. Procédé selon la revendication 9, dans lequel un système de test (14) selon l'une quelconque des revendications 1 à 5 est utilisé, dans lequel l'étape a) est réalisée par l'unité de génération de signaux (32), et dans lequel les étapes c) et d) sont réalisées par l'unité de réception (34).

11. Procédé selon la revendication 10, dans lequel des données d'étalonnage sont délivrées en utilisant la sortie d'étalonnage (40) du système de test (14).

12. Procédé selon l'une quelconque des revendications 9 à 11, dans lequel le signal de test est un signal d'amplitude variable avec un bruit variable.

13. Procédé selon l'une quelconque des revendications 9 à 12, dans lequel les données d'étalonnage sont déterminées en utilisant une fonction de coût, la fonction de coût étant notamment l'écart par rapport à une configuration de silencieux souhaitée.
